# EUROPEAN PATENT SPECIFICATION

(11) **EP 2 604 570 B1**
(45) Date of publication and mention of the grant of the patent: **17.09.2014**
(21) Application number: 11193239.8
(22) Date of filing: 13.12.2011
(51) Int. Cl.: B66D 1/36, F03D 11/00

(54) **Cable guiding in a wind turbine tower**
Kabelführung in einem Windturbinenturm
Guidage de câbles dans une tour d'éolienne

(43) Date of publication of application: 19.06.2013
(73) Proprietor: Siemens Aktiengesellschaft, 80333 München (DE)
(72) Inventor: Munk-Hansen, Thorkil, 7323 Give (DK)

(56) References cited:
- WO-A2-2010/023160
- JP-A- 2005 137 097
- JP-A- 2006 246 549
- US-A1- 2004 094 965

## Description

The present invention concerns a cable guiding system for a cable. Such cable guiding system is preferably installed in a wind turbine tower and thus realized for installation in a wind turbine tower. Such a system is disclosed in document US2004094965.

Wind turbines are made up of a tower on a foundation (in onshore applications) or a platform (in offshore applications) on which there rests a nacelle which houses the main electric and inner mechanical components such as the generator, transformers and connectors, a yaw and a cooling system, a drive train and optionally one or several gearboxes. The drive train connects the generator with a hub which is installed on the nacelle and which comprises a number of rotor blades.

Wind power is transferred from the rotor blades into a rotational movement of the hub and thus the drive train.

The tower of a wind turbine is often made of several tower segments placed on top of one another and firmly connected. However, they can also be made of one part for instance be realized as a cast reinforced concrete tower. Towers are often equipped with an elevator for easier access of staff to the nacelle from the ground. Such elevator also enables transport of spare parts and tools for components in the nacelle.

Between the ground level of the tower and the nacelle, several cables are connected: these comprise power cables as well as data cables and also the cables of the elevator. In particular the relatively heavy power cables, which can weigh more than 1000 kg are fixed to the tower and conduct electric power between a generator in the nacelle and an electricity grid.

It is a challenging and potentially hazardous undergoing to lift, fit, and connect the power cables in the tower and connect them to the nacelle and to components therein. The same applies to other cables such as the above-mentioned data and/or elevator cables.

In today's standard procedure such cables are lifted up, i.e. pulled in the erected tower. Thereby, there is a risk that the cable loosens or tears and falls down during handling or lifting. Therefore, the tower during this procedure must be vacated by staff to avoid injury from a falling cable. No person may stand below the cable during lifting. Such vacation procedure is time consuming and thus costly. Even though harm to staff may be avoided by that measure, substantial damage to internals of the tower can still occur.

It is the object of the invention to optimize such lifting process of cables inside a wind turbine tower, preferably in particular to reduce risks and/or time consumption during such process.

This object is met by a cable guiding system according to claim 1.

Accordingly, a cable guiding system of the aforementioned kind
- defines a passageway for the cable,
- comprises an arresting assembly which in operation provides a resistance in a first direction to a movement of the cable inside the passageway while allowing for a movement of the cable in a second direction,
- comprises an interface for fixing the cable guiding system to a tower of a wind turbine.

In this context, the definition of the term "cable" includes both cables comprising metal and other materials such as plastics, fibres or the like and also ropes or wires, i.e. essentially longitudinal devices which can be rolled onto a drum. In particular, "cable" does not only include power cables but also cables for data transfer and cables of an elevator system of the wind turbine.

The cable guiding system defines a passageway for the cable within which that cable is guided, i.e. held from at least one side along its cross extension perpendicular to its longitudinal extension. Such passageway can thus be an opening or channel, for instance an opening having essentially the shape of the cross extension of the cable. Such opening has the same or a slightly wider cross extension that that of the cable itself. The passageway can however also be open to at least one side along the cross extension of the cable. Preferably the passageway in such circumstance is limited by the cable guiding system at to opposite sides of the cross extension of the cable.

The cable guiding system is further made up of two principal components, which may, however, also be combined in one single piece. These two components are the arresting assembly on the one hand and the interface to the tower in the other hand. The interface thereby serves to fix the cable guiding system to the wind turbine tower whilst the arresting assembly defines the passageway and provides a resistance to the cable against movement (or passage) into the first direction. At the same time, the arresting assembly permits the cable to move in a second direction, namely the opposite direction of the first direction. This means that the resistance provided by the arresting assembly against a movement of the cable in the first direction is greater, preferably substantially greater, i.e. at least double, than the resistance against a movement of the cable in the second direction.

The interface to the tower can be realized in manyfold ways. For instance, it can comprise attachment means such as bolt holes for inserting bolts which further project into a part of the wind turbine tower. Other means include clamps or indeed any other mechanical or even mechano-chemical means such as an adhesive and/or a concrete connection. The interface is realized in such a way that it can be fixed to the tower of a wind turbine, i.e. it comprises such attachment means which correspond to the respective region of the wind turbine tower to which it is to be fixed. These attachment means are realized and localized such that they correspond to the location and/or shape of a corresponding interface of the wind turbine tower. Such interface of the wind turbine tower can for instance be located at its outside and/or at its inside, for example at a wall section of the wind turbine tower and/or at a lower or upper surface of a floor or roof of the tower's inside. Thus the expression "in a wind turbine tower" with respect to the installation of the cable guiding system also refers to an installation on the wind turbine tower's outside.

With the help of such cable guiding system the cable can be safely guided upwards in the wind turbine tower and will be prevented from suddenly falling down the complete way from where it has been released to the bottom of the tower. The resistance provided by the cable guiding system, i.e. by the arresting assembly, agains a movement into the first direction, i.e. downwards, provides for a certain braking force which can bring the downward movement to a standstill or at least reduce the speed of the cable on its way down, preferably substantially, i.e. at least by half. This means that the overall danger threat by a cable falling down is also substantially reduced and thus also the potential damage.

The invention also concerns a wind turbine tower assembly comprising a wind turbine tower and a cable guiding system according to the invention which is attached (i.e. fixed) to the tower. Such wind turbine tower assembly may comprise the tower with the cable guiding system only or - which is preferred - also a nacelle situated on top of the tower.

Further, the invention concerns a method for lifting a cable upwards in a wind turbine tower assembly whereby the cable is introduced into a cable guiding system according to the invention, installed in the wind turbine tower assembly and which cable is then moved in the second direction.

Lastly, the invention concerns a use of a cable guiding system according to the invention in a wind turbine tower assembly.

Particularly advantageous embodiments and features of the invention are given by the dependent claims, as revealed in the following description. Thereby, features revealed in the context of one of the methods may also be realized in the context of the respective other method and/or in the context of any one of the embodiments of the electric power plant according to the invention unless the contrary is explicitly stated.

The cable guiding system blocks a movement of the cable into the first direction while it permits for a movement of the cable in the second direction. These two directions which are preferably exactly opposite of each other can be chosen according to the environmental demands of the tower of the wind turbine. For imstance, they can both be oriented essentially horizontally so that the cable within them takes a two-fold essentially Z-shaped bend while passing through the cable guiding system. Such an orientation adds frictions which may be wished for in some cases. It is however preferred that the second direction is an upward direction from a lower level of the wind turbine tower to an upper level of the wind turbine tower, i.e. it is directed towards the nacelle or towards a position where the nacelle is later to be installed, thus a position on top of the tower. With such an orientation of the cable guiding system, frictions between the cable guiding system and the cable can be reduced when the cable is moved upwards. Accordingly, the first direction is preferably a downward direction.

According to a first embodiment of the invention, the arresting assembly comprises at least one brake shoe arranged to face the cable passing through the passageway. The brake shoe can be formed around a (part of the) circumference of the cable, i.e. it may have a corresponding shape to the shape of the cable which corresponding shape faces towards the cable, i.e. towards the passageway. However, the brake shoe can also be flat so that it only presses against the cable in a very limited contact region, which is essentially a line. Such contact region will be automatically increased in size by increasing the pressure of the brake shoe against the cable.

In this context, the arresting assembly preferably comprises at least two brake shoes, which most preferably face each other. That way, the cable can be pressed in between the two brake shoes so that a braking power can be applied to it from both sides which makes braking more effective.

One version of the embodiment is realized such that the cable guiding system comprises a brake shoe rigidly arranged relative to the passageway and a movable component arranged to press the cable in the direction of that brake shoe. Such movable component can for instance be a second brake shoe or a different element or part such as a roller. The movable component is preferably arranged on the opposite side of the passageway with respect to the brake shoe which is rigidly arranged.

As for the passageway, it is advantageous if it has an essentially tubular shape. This shape can be fully in part formed by one or more brake shoes or other components of the cable guiding system which can potentially come into contact with the cable.

The cable guiding system according to the invention provides a resistance in a first direction to a movement of the cable while allowing for a movement of the cable in the second direction. This differenciation of resistances can for instance be realized by a control mechanism and/or logic which monitors the movement of the cable and which will apply a braking force to the cable in case it moves into the undesired first direction. It is preferred that the differenciation of resistances to the movement of the cable with respect to the two moving directions is achieved by constructional means rather than external control means.

One way of how to realize such an automatic application of resistance towards the cable moving in the first direction is by equipping the arresting assembly with projections projecting into the passageway which projections are preferably directed to approach the cable at an angle below 90° to the first direction. These projections are thus directed against the first direction so that they provide for an additional resistance against a movement of the cable in the undesired first direction while at the same time allowing for a relatively free movement of the cable in the opposite direction, i.e. the desired second direction. Such projections can for instance be located on a surface of a brake shoe in the direction of the passageway. In other words: The passageway can be realized by one or more structured surfaces of the cable guiding system. Alternative or additional shapes of such structures are for instance pointed pieces pointing upwards and/or radially towards the cable.

Another way of automatic application of resistance, which can be used alternatively or additionally to the mentioned in the previous paragraph is by providing the cable guiding system according to the invention with at least one hinge realized to
- connect the interface with the arresting assembly in such way that the arresting assembly can be tilted (at least in part) relative to the interface,
- and/or connect a brake shoe with other parts of the arresting assembly in such way that the brake shoe can be tilted (again at least in part) relative to the other parts of the arresting assembly.

Such tilting mechanism makes it possible that this components of the arresting assembly which can potentially come into contact with the cable will automatically be tilted (for instance by the friction forces of the cable towards the tiltable part) towards the cable in case of a movement in the first direction while being slightly tilted away from the cable in case of a movement in the second direction. Therefore, the braking or resisting forces of the arresting assembly against the cable can be adjusted in dependence of the direction of movement of the cable. It is to be noted in this case that under the "movement" of the cable there is also understood the presence of a moving force of the cable in the respective direction even if no actual movement occurs (yet).

In addition or as an alternative to such automatic measures to guide the movement of the cable preferably only in the desired second direction use can also be made of a motor. A cable guiding system according to the invention can thus advantageously also comprise a motor realized such that in operation it moves the cable at least in the second direction. Such motor can be connected for instance to a roller which is driven by the motor to translate the motor's forces and movement into the cable. This way the movement of the cable in the second direction or in fact a controlled and slowed down movement of the cable in the first direction can be realized. In this context the movement of the rotor is preferably synchronized with that of a winch at the top of the tower of the wind turbine tower assembly which winch has been described before. That way it can be made sure that the overall movement of the cable is controlled and that there is danger of an asynchronous and thus disturbed movement of the winch and of the motor in the cable guiding system.

Inside a wind turbine tower assembly according to the invention, a plurality of cable guiding systems can be installed. If several of these cable guiding systems (preferably all of them) comprise motors of the above-mentioned kind, their movements are preferably all synchronized and also synchronized with a winch as descirbed above (if present).

The cable guiding system can be fixed to the wind turbine tower assembly on a temporary basis, in particular in such cases in which it is intended to use it during the operation of the wind turbine, e.g. for maintenance during the lifetime of the wind turbine. It is preferred, however, that the cable guiding system is temporarily fixed to the wind turbine tower. This way it can be reused for assembly of other wind turbines and also does not stand in the way during normal operation of the wind turbine.

The cable guiding system can be arranged outside of the wind turbine tower. However, it has proven to be advantageous, for instance safer, to arrange it in an interior of the wind turbine tower. This way, in case of the cable falling down unexpectedly during the lifting process, the danger of people or material getting injured is substantially reduced.

In this context, it is preferred that the cable guiding system is fixed to a flange and/or a platform, most preferably at a conjunction of segments of the wind turbine tower. Often wind turbine towers are segmented into e.g. 25 metre long tubular segments and comprise platforms and/or flanges at several heights. The platforms are for instance mounted to flanges at end of tower segments which flanges are used to connect adjacent tower segments with bolts. Such platforms are often installed, in particular at such conjunctions, in order to provide for a safe stand of persons at different operation levels and for a separation of segments so that objects such as tools or screws cannot fall a long distance inside the tower.

The flanges or platforms provide for a simple means at which the cable guiding system can be fixed firmly which provides for a solid connection of the cable guiding system, also possibly (as preferred) at essentially constant intervals. The platforms often comprise an opening possibly with a hatch allowaing a ladder, elevator and - for the purpose in the context of the present invention - a cable guiding equipment to traverse through and continously range along the longitudinal extension of the tower.

Other objects and features of the present invention will become apparent from the following detailed descriptions considered in conjunction with the accompanying drawings. It is to be understood, however, that the drawings are designed solely for the purposes of illustration and not as a definition of the limits of the invention.

In the drawings, like reference numbers refer to like objects throughout. Objects in the diagrams are not necessarily drawn to scale.
Fig. 1 shows a schematic cross-sectional view of a wind turbine assembly according to an embodiment of the invention,
Fig. 2 shows the same wind turbine assembly in a state where a cable to be transported upwards has been released and has fallen downwards,
Fig. 3 shows the same wind turbine assembly in a state where the cable is being transported upwards,
Fig. 4 shows a perspective view of a cable guiding system according to a first embodiment of the invention,
Fig. 5 shows a cross-sectional view of the cable guiding system of Fig. 4,
Fig. 6 shows a perspective view of a cable guiding system according to a second embodiment of the invention,
Fig. 7 shows a cross-sectional view of the cable guiding system of Fig. 6,
Fig. 8 shows a more detailed cross-sectional view along a plain VIII - VIII of Fig. 4,
Fig. 9 shows a cross-sectional view of a cable inside a cable guiding system according to a third embodiment of the invention.

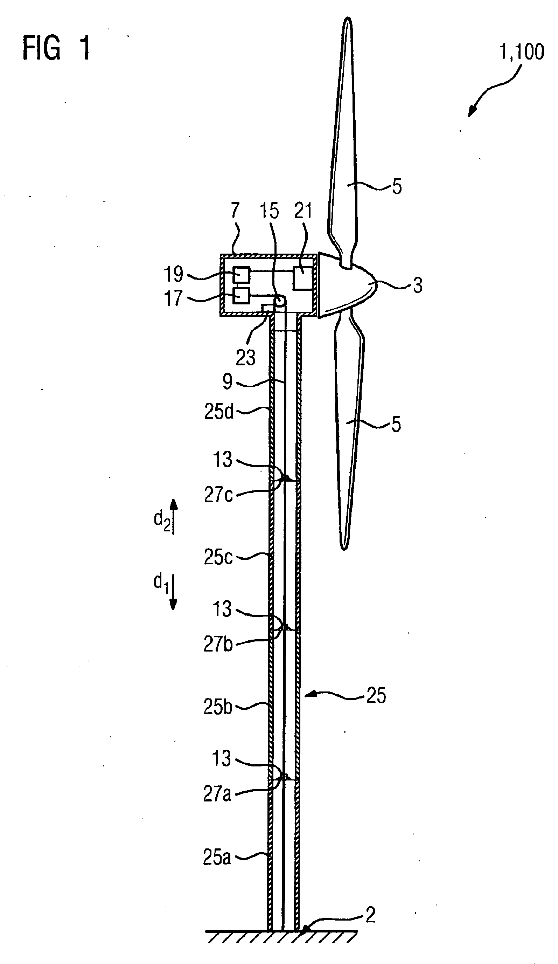

Fig. 1 shows a wind turbine assembly 100 which is realized as a complete wind turbine 1 in this case. The wind turbine 1 comprises a tower 25 with four segments 25a, 25b, 25c, 25d joined together along the longitudinal extension of the tower 25 at conjunctions. At these conjunctions, platforms 27a, 27b, 27c are installed in the interior of the tower 25. On top of the tower 25, there is installed a nacelle 7 to which there is joined a hub 3 with rotor blades 5. The term "wind turbine assembly" 100 can also be used for an uncompleted wind turbine 1, i.e. without for instance the rotor blades 5, and/or the hub 3, and/or parts of the nacelle 7.

Inside the nacelle 7 there are assembled a generator 21 which generates electrical energy from the wind-induced rotational movement of the hub 3, a converter 19 connected to the generator 21 and a power transformer 17 connected to the converter 19. The electric power from the power transformer 17 is transported down the tower 25 by means of a power cable 9 which extends from the nacelle 7 to the bottom of the tower 25 and which is then connected to a power grid (not shown).

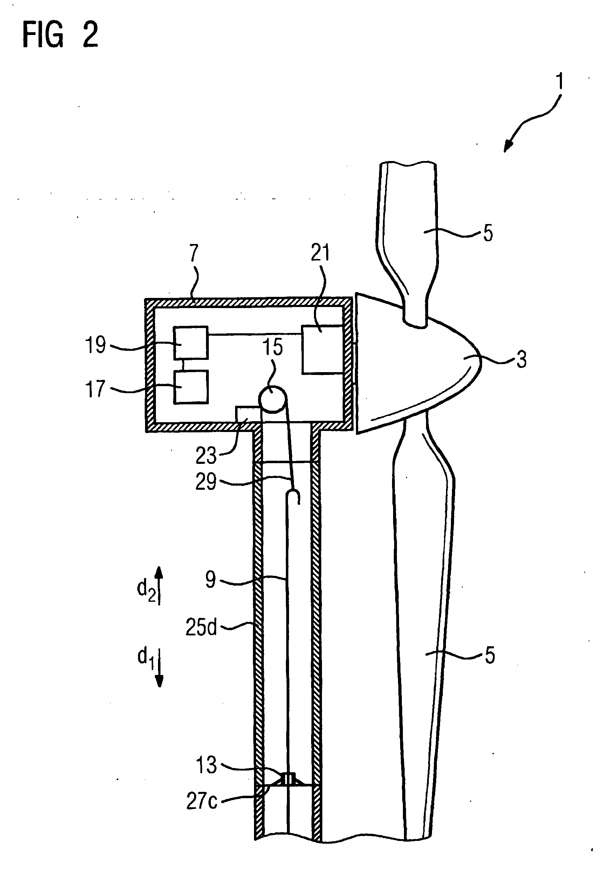

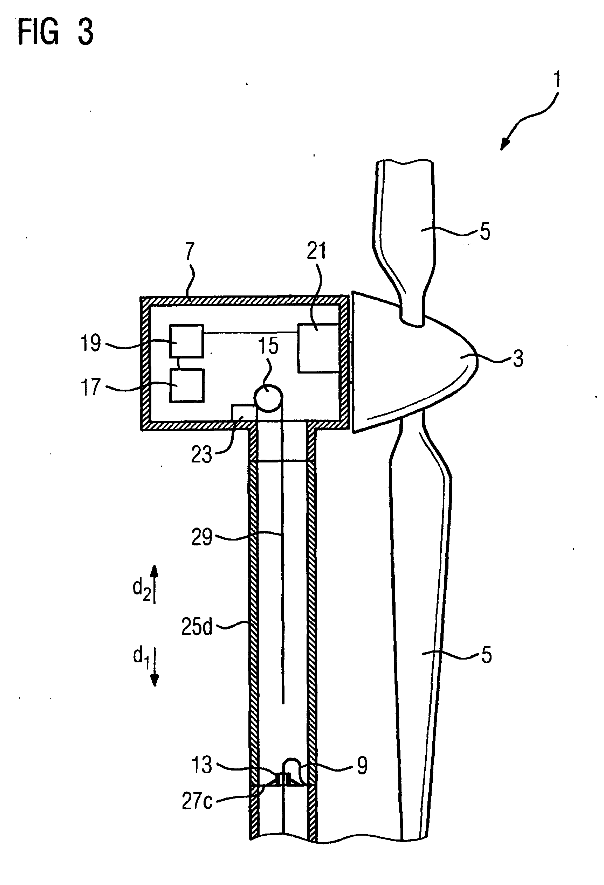

During assembly of the wind turbine assembly 100 the power cable 9 has to be lifted up the tower 25 to the nacelle 7. For that purpose a winch 15 is installed in the nacelle which winch 15 is driven by a motor drive 23. To the winch 15, there is attached a rope (not shown - cf. Figs. 2 and 3) which can be connected to the power cable 9 so that the power cable 9 is transported by the winch 15 via the rope up to the nacelle 7.

In order to avoid damages and dangers to persons inside the tower 25 during such lifting process of the power cable 9 (or indeed of any other necessary cable) use is made of a number of cable guiding systems 13, which are installed on the upper surfaces of the platforms 27a, 27b, 27c. Through these cable guiding systems 13 the cable 9 is led so that when falling uncontrolledly in a first, downward direction d₁ it will be hindered from going further down than the next of the platforms 27a, 27b, 27c. On the other hand, a nearly unhindered or unrestricted movement is possible in the opposite direction, i.e. the second, upward direction d₂.

This principle is explained in more detail with reference to Figs. 2 and 3:
In Fig. 2 the process of lifting the power cable 9 by means of the winch 15 is shown in more detail. Thereby, it can be observed, that a rope 29 extends from the winch 15 to the power cable 9 which is connected to the rope 29. The winch 15 pulls up the power cable 9 via the rope 29 in the second direction d₂. The power cable 9 is thereby held by the cable guiding system 13 installed on the uppermost platform 27c (and in fact by the other cable guiding systems 13 installed on the lower platforms 27a, 27b which are not shown in both Figs 2 and 3).

In Fig. 3 it can be seen what happens if the connection between the rope 29 and the power cable 9 fails. The power cable 9 drops down to the uppermost platform 27c, but is held by the cable guiding system 13 on this platform 27c so that it does not go further down the tower 25. It can be concluded that the movement of the power cable 9 in the first direction d₁ is prevented by the cable guiding system 13 so that the movement of the power cable 9 downwards ends as soon as the power cable 9 has fallen down onto the floor of the uppermost platform 27c.

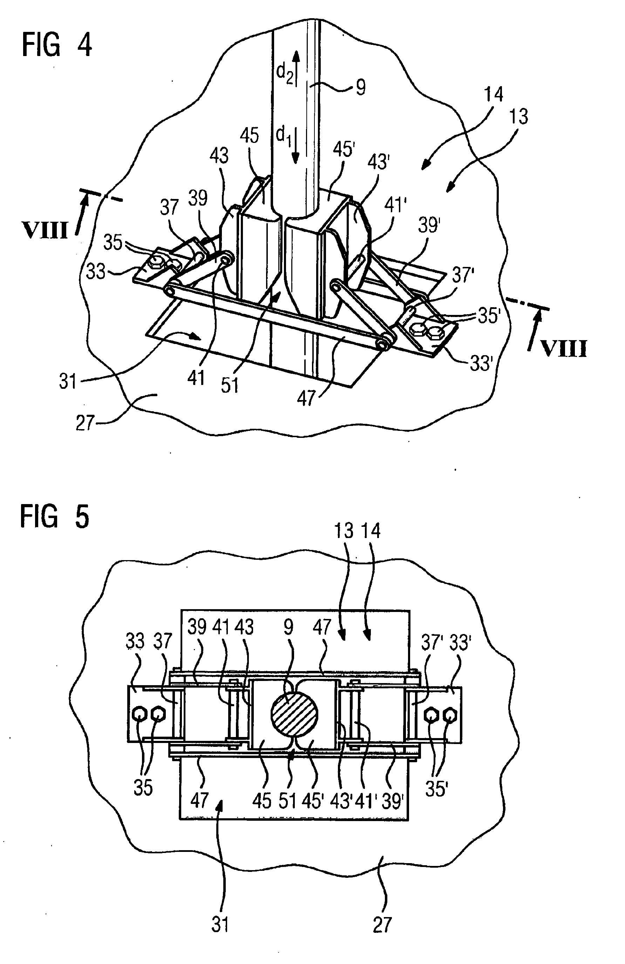

Figs. 4 and 5 show a cable guiding system 13 according to a first embodiment of the present invention. It comprises an arresting assembly 14 and two interfaces 33, 33' realized as basesegments comprising basebrackets for fixing the cable guiding system 13 to the tower 25 of a wind turbine assembly 100 as shown in the previous figures. In order to permit for a passage through a platform 27, which can indeed be any of the platforms 27a, 27b, 27c shown in the previous figures, such platform 27 comprises an opening 31 through which the power cable 9 is led. The two interfaces 33, 33' are connected to the floor of the platform 27 by means of two bolts 35, 35'. The connection of the two interfaces 33, 33' and to the arresting assembly 14 is realized by two first hinges 37, 37' realized as first tiltbars 37, 37'.

The arresting assembly 14 comprises two plastic brake shoes 45, 45' which press against the power cable 9 and which are fixed to brake shoe plates 43, 43'. Each of the brake shoe plates 43, 43' are hingedly connected via second hinges 41, 41' or tiltbars 43, 43' to diagonal connection members 39, 39' or tiltbars 39, 39' which connection members 39, 39' then connect the brake shoe plates 43, 43' to the first hinges 37, 37'. The two interfaces 33, 33' are further interconnected by two horizontal connector beams 47 or basebars 47.

The power cable 9 is led through a passageway 51 defined by the shape and position of the two brake shoes 45, 45'. Thereby, each brake shoe 45, 45' comprises a part of a round guidechannel which forms the passageway 51. A depth of the part of the guidechannel of each of the brake shoes 45, 45' is smaller than the radius of the power cable 9. Through the passageway 51 the power cable 9 can pass virtually freely in the second direction d₂, i.e. upwards. It slides along the brake shoes 45, 45'. In case of failure of the winch 15 or of a tearing of the rope 29, gravity pull causes the power cable 9 to move or slip downwards in the passageway 51. When moving in this first direction d₁, the brake shoes 45, 45' due to their double hinged connections to the interfaces 33, 33' will be pressed more firmly to the power cable 9 so that the downward movement in the first direction d₁ is hindered, i.e. essentially prevented:
Gravity force acting on the brake shoes 45, 45' causes these brake shoes 45, 45' to be in contact with the power cable 9 more firmly. Due to friction between the brake shoes 45, 45' and the power cable 9, the brake shoes 45, 45' with the brake shoe plates 43, 43' are pulled downwards while being tilted along the second hinges 41, 41'. They also tilt along the first hinges 37, 37' held fast at the interfaces 33, 33'. Therefore, the brake shoe plates 43, 43' with the brake shoes 45, 45' are forced to move towards the power cable 9 and thus to clamp the power cable 9. As the cable guiding system 13 is fixed to the platform 27 the clamped power cable 9 is held fast. With an increase in pull downwards such clamping force increases and the pulling force is transferred into the structure of the tower 25. Consequently the power cable 9 is caught and thus restricted to an upward movement when engaged in the cable guiding system 13. Only a loose upper section of the power cable 9 can fall down freely. When the power cable 9 is again moved upwards the friction between the power cable 9 and the brake shoes 45, 45' causes the brake shoes 45, 45' to move upwards and to liberate the power cable 9 once again.

It can be concluded that the cable guiding system 13, in particular the arresting assembly 14 provides a substantial resistance towards the power cable 9 against a downward movement in the first direction d₁ while permitting for a relatively free passage in the upward direction d₂.

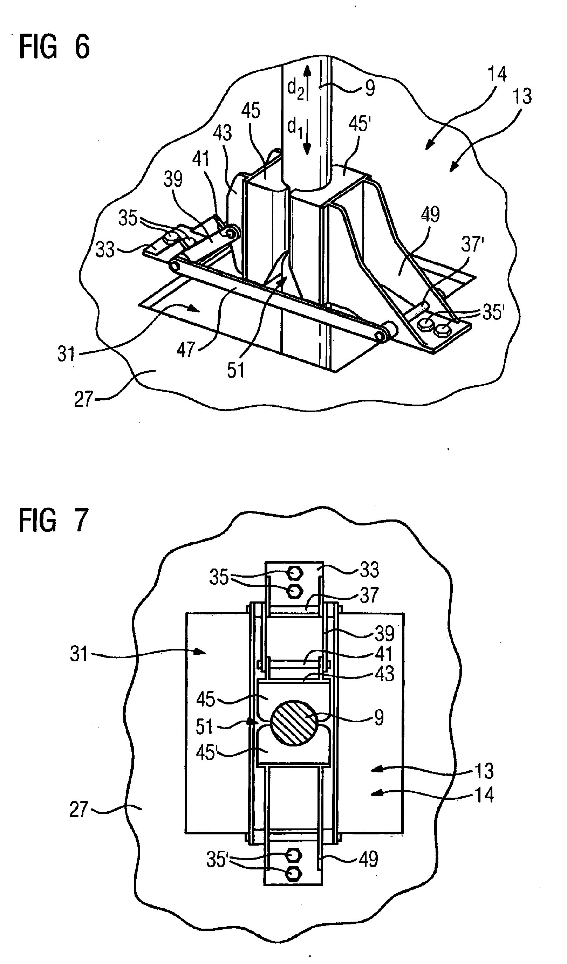

Figs. 6 and 7 show a similar assembly of the cable guiding system 13 according to second embodiment of the invention. This second embodiment of the invention is basically characterized by the fact that only one of the two brake shoes 45, 45' is hingedly connected, namely the first brake shoe 45 which hingedly connected to the first interface 33 in the same manner as described with reference to Figs. 4 and 5. On the other side of the cable guiding system 13 the second brake shoe 45' is rigidly connected to a differently shaped interface 49. This interface 49 extends from the bolts 35' right up to the second brake shoe 45' and is thus fixedly connected to the second brake shoe 45'. Such cable guiding system 13 according to the second embodiment shows the effect that only the first brake shoe 45 will be pressed towards the power cable 9 when that moves in the first direction d₁ whereas the second brake shoe 45' always remains in the same position with reference to the power cable 9. A variable braking force against the power cable 9 is therefore exclusively inflicted by the first brake shoe 45 due to its injured connection to the first interface 33.

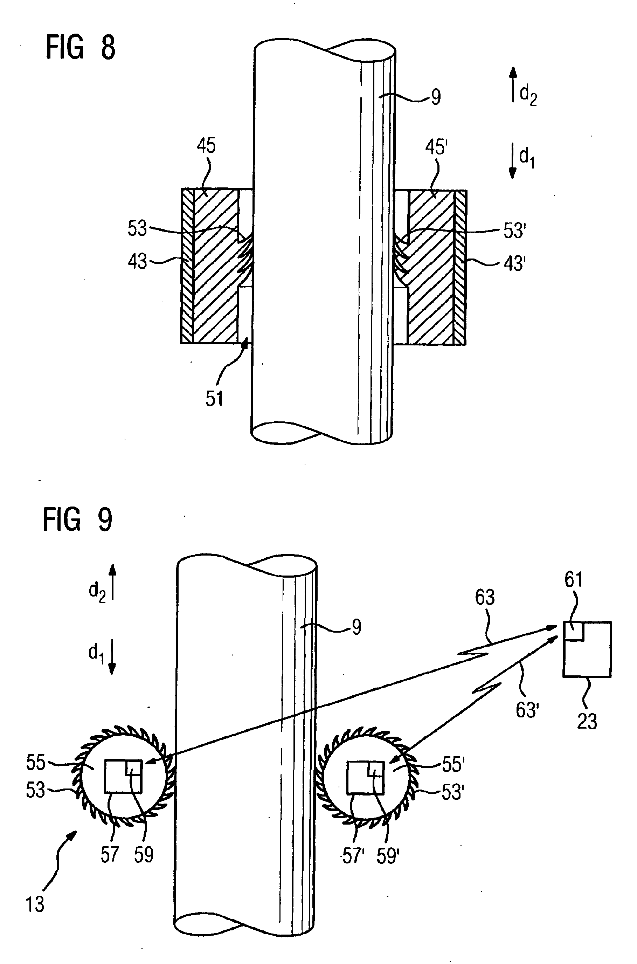

Figure 8 shows in a cross-sectional view the power cable 9 inside the passageway 51. Of the cable guiding system 13 only the two brake shoes 45, 45' and the two brake shoe plates 43, 43' are shown for reasons of clarity. It can be seen that the brake shoes 45, 45' along their surfaces towards the power cable 9 are equipped with projections 53 having the shape of lamellas 53 with a curved upward shape against the first direction d₁. Such projections 53 have the advantage that they further enhance the breaking effect by the two brake shoes 45, 45'. In addition, the contact between the power cable 9 and the brake shoes 45, 45' is restricted to very small regions of the brake shoes 45, 45' i.e. to the tips of the projections 53 during an upward movement of the power cable 9 in the second direction d₂. If the power cable 9 moves downward in the first direction d₁ however, the projections help to inflict a downward force onto the two brake shoe 45, 45' which helps, due to the hinged connections of the two brake shoes 45, 45' to move these brake shoes 45, 45' downwards and thus into the direction of the power cable 9 so that the braking force against the downward movement of the power cable 9 is increased more rapidly and more effectively. It is to be understood that the second embodiment as shown in Figs. 6 and 7 can be realized accordingly, i.e. also with the same or with similar projections towards the passageway 51 of the power cable 9.

Fig. 9 shows a cross-section of a power cable 9 inside a cable guiding system 13 according to a third embodiment of the invention. Here, instead of brake shoes 45, 45' use is made of two rollers 55, 55' which again comprise projections 53, 53' realized in an essentially similar manner as shown in the context of Fig. 8. These projections 53, 53' are directed in such way that they project from the rollers 55, 55' following a movement of the rollers 55, 55' such that the power cable 9 is transported in the upward second direction d₂. Both rollers 55, 55' are driven motor drives 57, 57' so that the rollers 55, 55' actively transport the power cable 9 upwards. Due to the projections 53, 53' a downward movement of the power cable 9 in the first direction d₁ is again hindered or even prevented.

In order to synchronize the movement of the rollers induced by their two motor drives 57, 57' the two motor drives 57, 57' are equipped with signalling units 59, 59' connected via wireless signal lines 63, 63' to another signalling unit 61 in the motor 23 of the winch 15 (cf. Fig. 1). This way a coordination of the movements of the motor drives 57, 57' in the rollers 55, 55' and of the motor 23 driving the winch 15 can be achieved.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements.

## Claims

1. Cable guiding system (13) for a cable (9) which cable guiding system
- defines a passageway (51) for the cable (9)
- comprises an interface (33, 33', 49) for fixing the cable guiding system to a tower (25) of a wind turbine (1)
**characterized in that**
- the cable guiding system comprises an arresting assembly (14) which in operation provides a resistance in a first direction (d₁) to a movement of the cable (9) inside the passageway (51) while allowing for a movement of the cable (9) in a second (opposite) direction (d₂).

2. Cable guiding system according to claim 1, whereby the second direction (d₂) is an upward direction from a lower level of the wind turbine tower (25) to an upper level of the wind turbine tower (25).

3. Cable guiding system according to claim 1 or 2, whereby the arresting assembly (13) comprises at least one brake shoe (45, 45') which brake shoe is arranged to face the cable (9) passing through the passageway (51).

4. Cable guiding system according to claim 3, whereby the arresting assembly (13) comprises at least two brake shoes (45, 45'), preferably facing each other.

5. Cable guiding system according to claim 3 or 4, comprising a brake shoe (45') rigidly arranged relative to the passageway (51) and a movable component (45) arranged to press the cable (9) in the direction of that brake shoe (45').

6. Cable guiding system according to any one of the preceding claims, wherein the passageway (51) has an essentially tubular shape.

7. Cable guiding system according to any one of the preceding claims, comprising projections (53) of the arresting assembly (14) projecting into the passageway.

8. Cable guiding system according to claim 7, whereby the projections (53) are directed to approach the cable (9) at an angle below 90° to the first direction (d₂).

9. Cable guiding system according to any one of the previous claims, comprising at least one hinge (37, 37', 41, 41') realized to
- connect the interface (33, 33', 49) with the arresting assembly (14) in such way that the arresting assembly (14) can be tilted relative to the interface (33, 33', 49),
- and/or connect a brake shoe (45, 45') with other parts of the arresting assembly (14) in such way that the brake shoe (45, 45') can be tilted relative to the other parts of the arresting assembly (14).

10. Cable guiding system according to any one of the preceding claims, comprising a motor (57, 57') realized such that in operation it moves the cable (9) at least in the second direction (d₂).

11. Wind turbine tower assembly (100) comprising a wind turbine tower (25) and a cable guiding system (13) according to any one of the preceding claims attached to the tower (25).

12. Wind turbine tower assembly according to the preceding claim, whereby the cable guiding system (13) is temporarily fixed to the wind turbine tower (25).

13. Wind turbine tower assembly according to claim 11 or 12, whereby the cable guiding system (13) is arranged in an interior of the wind turbine tower (25).

14. Wind turbine tower assembly according to claim 13, whereby the cable guiding system (13) is fixed to a flange and/or a platform (27a, 27b, 27c), preferably at a conjunction of segments (25a, 25b, 25c, 25d) of the wind turbine tower (25).

15. Method for lifting a cable (9) upwards in a wind turbine tower assembly (100) whereby the cable (9) is introduced into a cable guiding system (13) according to any one of claims 1 to 10, installed in the wind turbine tower assembly (100) and which cable (9) is then moved in the second direction (d₂).

## Patentansprüche

1. Kabelführungssystem (13) für ein Kabel (9), wobei dieses Kabelführungssystem
- einen Durchgang (51) für das Kabel (9) definiert,
- eine Schnittstelle (33, 33', 49) zum Befestigen des Kabelführungssystems an einem Turm (25) einer Windkraftanlage (1) umfasst,
**dadurch gekennzeichnet, dass**
- das Kabelführungssystem eine Arretierungsanordnung (14) umfasst, welche in Betrieb einer Bewegung des Kabels (9) innerhalb des Durchgangs (51) in einer ersten Richtung (d₁) einen Widerstand entgegensetzt, während sie eine Bewegung des Kabels (9) in einer zweiten (entgegengesetzten) Richtung (d₂) erlaubt.

2. Kabelführungssystem nach Anspruch 1, wobei die zweite Richtung (d₂) eine Aufwärtsrichtung von einer unteren Ebene des Windkraftanlagenturms (25) zu einer oberen Ebene des Windkraftanlagenturms (25) ist.

3. Kabelführungssystem nach Anspruch 1 oder 2, wobei die Arretierungsanordnung (13) mindestens einen Bremsschuh (45, 45') umfasst, wobei dieser Bremsschuh so angeordnet ist, dass er dem durch den Durchgang (51) verlaufenden Kabel (9) zugewandt ist.

4. Kabelführungssystem nach Anspruch 3, wobei die Arretierungsanordnung (13) mindestens zwei Bremsschuhe (45, 45') umfasst, die vorzugsweise einander gegenüberliegen.

5. Kabelführungssystem nach Anspruch 3 oder 4, welches einen Bremsschuh (45'), der bezüglich des Durchgangs (51) starr angeordnet ist, und eine bewegliche Komponente (45), die so angeordnet ist, dass sie das Kabel (9) in die Richtung dieses Bremsschuhs (45') drückt, umfasst.

6. Kabelführungssystem nach einem der vorhergehenden Ansprüche, wobei der Durchgang (51) eine im Wesentlichen rohrförmige Gestalt hat.

7. Kabelführungssystem nach einem der vorhergehenden Ansprüche, welches Vorsprünge (53) der Arretierungsanordnung (14) umfasst, die in den Durchgang hinein vorstehen.

8. Kabelführungssystem nach Anspruch 7, wobei die Vorsprünge (53) so ausgerichtet sind, dass sie sich dem Kabel (9) unter einem Winkel von weniger als 90° zu der ersten Richtung (d₂) nähern.

9. Kabelführungssystem nach einem der vorhergehenden Ansprüche, welches mindestens ein Drehgelenk (37, 37', 41, 41') umfasst, das dazu ausgebildet ist,
- die Schnittstelle (33, 33', 49) mit der Arretierungsanordnung (14) auf eine solche Weise zu verbinden, dass die Arretierungsanordnung (14) bezüglich der Schnittstelle (33, 33', 49) geschwenkt werden kann,
- und/oder einen Bremsschuh (45, 45') mit anderen Teilen der Arretierungsanordnung (14) auf eine solche Weise zu verbinden, dass der Bremsschuh (45, 45') bezüglich der anderen Teile der Arretierungsanordnung (14) geschwenkt werden kann.

10. Kabelführungssystem nach einem der vorhergehenden Ansprüche, welches einen Motor (57, 57') umfasst, der derart ausgebildet ist, dass er in Betrieb das Kabel (9) mindestens in die zweite Richtung (d₂) bewegt.

11. Windkraftanlagenturm-Anordnung (100), welche einen Windkraftanlagenturm (25) und ein Kabelführungssystem (13) nach einem der vorhergehenden Ansprüche, das an dem Turm (25) angebracht ist, umfasst.

12. Windkraftanlagenturm-Anordnung nach dem vorhergehenden Anspruch, wobei das Kabelführungssystem (13) vorübergehend an dem Windkraftanlagenturm (25) befestigt ist.

13. Windkraftanlagenturm-Anordnung nach Anspruch 11 oder 12, wobei das Kabelführungssystem (13) in einem Inneren des Windkraftanlagenturms (25) angeordnet ist.

14. Windkraftanlagenturm-Anordnung nach Anspruch 13, wobei das Kabelführungssystem (13) an einem Flansch und/oder einer Plattform (27a, 27b, 27c), vorzugsweise an einer Verbindungsstelle von Segmenten (25a, 25b, 25c, 25d) des Windkraftanlagenturms (25), befestigt ist.

15. Verfahren zum Hochziehen eines Kabels (9) in einer Windkraftanlagenturm-Anordnung (100), wobei das Kabel (9) in ein Kabelführungssystem (13) nach einem der Ansprüche 1 bis 10 eingeführt wird, das in der Windkraftanlagenturm-Anordnung (100) installiert ist, und wobei dieses Kabel (9) dann in der zweiten Richtung (d₂) bewegt wird.

## Revendications

1. Système (13) de guidage de câble pour un câble (9), lequel système de guidage de câble
- définit un passage (51) pour le câble (9)
- comprend une interface (33, 33', 49) pour fixer le système de guidage de câble à une tour (25) d'une éolienne (1)
**caractérisé en ce que**
- le système de guidage de câble comprend un ensemble (14) d'arrêt qui, en fonctionnement, offre une résistance dans un premier sens (d₁) à un mouvement du câble (9) à l'intérieur du passage (51) tout en permettant un mouvement du câble (9) dans un deuxième sens (d₂) (opposé).

2. Système de guidage de câble selon la revendication 1, dans lequel le deuxième sens (d₂) est un sens vers le haut à partir d'un niveau inférieur de la tour (25) d'éolienne jusqu'à un niveau supérieur de la tour (25) d'éolienne.

3. Système de guidage de câble selon la revendication 1 ou 2, dans lequel l'ensemble (13) d'arrêt comprend au moins un segment de frein (45, 45'), lequel segment de frein est agencé de façon à faire face au câble (9) traversant le passage (51).

4. Système de guidage de câble selon la revendication 3, dans lequel l'ensemble (13) d'arrêt comprend au moins deux segments de frein (45, 45'), se faisant préférablement face l'un l'autre.

5. Système de guidage de câble selon la revendication 3 ou 4, comprenant un segment de frein (45') agencé de manière rigide par rapport au passage (51) et un composant (45) mobile agencé de façon à presser le câble (9) dans la direction de ce segment de frein (45').

6. Système de guidage de câble selon l'une quelconque des revendications précédentes, dans lequel le passage (51) a une forme essentiellement tubulaire.

7. Système de guidage de câble selon l'une quelconque des revendications précédentes, comprenant des projections (53) de l'ensemble (14) d'arrêt se projetant dans le passage.

8. Système de guidage de câble selon la revendication 7, dans lequel les projections (53) sont dirigées de façon à approcher le câble (9) selon un angle inférieur à 90° par rapport au premier sens (d₂).

9. Système de guidage de câble selon l'une quelconque des revendications précédentes, comprenant au moins une charnière (37, 37', 41, 41') réalisée pour
- connecter l'interface (33, 33', 49) avec l'ensemble (14) d'arrêt de manière à ce que l'ensemble (14) d'arrêt puisse être incliné par rapport à l'interface (33, 33', 49),
- et/ou connecter un segment de frein (45, 45') avec d'autres parties de l'ensemble (14) d'arrêt de manière à ce que le segment de frein (45, 45') puisse être incliné par rapport aux autres parties de l'ensemble (14) d'arrêt.

10. Système de guidage de câble selon l'une quelconque des revendications précédentes, comprenant un moteur (57, 57') réalisé de manière à ce que, en fonctionnement, il déplace le câble (9) au moins dans le deuxième sens (d₂).

11. Ensemble (100) de tour d'éolienne comprenant une tour (25) d'éolienne et un système (13) de guidage de câble selon l'une quelconque des revendications précédentes fixé à la tour (25).

12. Ensemble de tour d'éolienne selon la revendication précédente, dans lequel le système (13) de guidage de câble est temporairement fixé à la tour (25) d'éolienne.

13. Ensemble de tour d'éolienne selon la revendication 11 ou 12, dans lequel le système (13) de guidage de câble est agencé dans un intérieur de la tour (25) d'éolienne.

14. Ensemble de tour d'éolienne selon la revendication 13, dans lequel le système (13) de guidage de câble est fixé à un rebord et/ou une plate-forme (27a, 27b, 27c), préférablement au niveau d'une conjonction de segments (25a, 25b, 25c, 25d) de la tour (25) d'éolienne.

15. Procédé pour lever un câble (9) vers le haut dans un ensemble (100) de tour d'éolienne, dans lequel le câble (9) est introduit dans un système (13) de guidage de câble selon l'une quelconque des revendications 1 à 10, installé dans l'ensemble (100) de tour d'éolienne, et lequel câble (9) est ensuite déplacé dans le deuxième sens (d₂).
